Europäisches Patentamt

**European Patent Office**

**Office européen des brevets**

(11) Numéro de publication: **0 123 602**
**B1**

(12) **FASCICULE DE BREVET EUROPEEN**

(45) Date de publication du fascicule du brevet:
**22.06.88**

(21) Numéro de dépôt: **84400711.2**

(22) Date de dépôt: **11.04.84**

(51) Int. Cl.⁴: **G 01 B 11/08, B 24 B 49/00**

(54) ·Procédé et dispositif de mesure de précision de la hauteur des aubes d'un rotor.

(30) Priorité: **20.04.83 FR 8306416**

(43) Date de publication de la demande:
**31.10.84 Bulletin 84/44**

(45) Mention de la délivrance du brevet:
**22.06.88 Bulletin 88/25**

(84) Etats contractants désignés:
**DE FR GB SE**

(56) Documents cités:
**FR - A - 2 197 162**
**FR - A - 2 469 697**
**GB - A - 1 303 064**
**US - A - 3 835 591**

**LASER & ELEKTRONIK-OPTIK, vol. 7, no. 3, septembre 1975, Stuttgart (DE) "Rotor-Radius-Vermessungsgerät arbeitet mit Laser", pages 10,11**
**Encyclopedie of Instrumentation and Control; de D.M. Considine 1971, Mc Graw Hill Book Company, pages 644-646**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Bizot, Henri, 102, boulevard des Batignolles, F-75017 Paris (FR)**
Inventeur: **Dautremont, Jean, 528, rue du Port Vaux le Penil, F-77000 Melun (FR)**
Inventeur: **Sylvian, Alain, chemin des Bas Bouillons Thibault des Vignes, F-77400 Lagny (FR)**

(74) Mandataire: **Moinat, François, S.N.E.C.M.A. Service des Brevets Boîte Postale 81, F-91003 Evry Cédex (FR)**

ACTORUM AG

## Description

L'invention concerne un procédé de mesure de précision par laser de la hauteur des aubes d'un rotor entraîné en rotation.

On connaît déjà par le brevet français 2 287 677 un procédé du type précité.

L'objet du procédé selon l'invention est de mesurer la hauteur d'aubes lorsque celles-ci sont dans la position qu'elles auront en fonctionnement: aussi fait-on tourner le rotor à une vitesse suffisante pour centrifuger toutes les aubes et caler leur pied contre la paroi de retenue des alvéoles du rotor.

On connaît également par FR-A-2 197 162 un procédé de mesure d'un interstice entre une pièce tournante et une pièce fixe, notamment entre une extrémité d'aube et le carter associé. Un faisceau de rayons, par exemple laser, émis par une source est analysé par un détecteur après interception partielle éventuelle.

Par ailleurs, un article intitulé «Rotor-Radius-Vermessungsgerät arbeitet mit Laser» publié dans la revue «Laser + Elektro-Optik», volume 7, numéro 3, de septembre 1975 décrit un appareillage de mesure de hauteur d'aubes ou de diamètre de disque ou de pièce tournante par laser dont le faisceau après interception par la pièce est analysé par un récepteur. On obtient ainsi un procédé du type précité du genre dans lequel:

– on illumine avec un faisceau laser une extrémité du diamètre externe du rotor,

– on dispose sur le chemin du faisceau laser au-delà de la partie illuminée du rotor une cellule photo-électrique susceptible de recevoir une partie du faisceau laser non interceptée par le rotor au moment de la mesure pour en fournir un signal analogique,

– on recueille ce signal en tant qu'indication du diamètre externe du rotor.

Le but de l'invention est de proposer un nouveau procédé du genre précité, ne demandant qu'un appareillage relativement simple pour sa mise en œuvre et permettant de déterminer une aube de plus grande hauteur sur un rotor.

Ce but est atteint selon l'invention du fait qu'on fait tourner le rotor à environ 3000 tr/mn de manière à ce que les aubes soient centrifugées à leur position radiale maximale et qu'une commande associée à des moyens stroboscopiques intervient de manière qu'à chaque tour une aube déterminée du rotor est illuminée par le faisceau laser et le signal recueilli donne l'indication de la hauteur de ladite aube illuminée, réalisant une mesure aube par aube et déterminant la hauteur maximale de chaque aube.

Selon une caractéristique très avantageuse de l'invention, la mesure est associée à une opération de rectification à grande vitesse, ce qui permet d'obtenir en sommet d'aube une tolérance aussi faible que possible (inférieur à $\frac{2}{100}$ de mm) par rapport à des références de centrage.

L'invention concerne également un dispositif pour la mise en œuvre du procédé de l'invention. Outre un laser, des moyens d'entraînement du rotor en rotation, une cellule photo-électrique à signal analogique disposée sur le chemin du faisceau laser au-delà du rotor et un analyseur-enregistreur pour recueillir le signal analogique délivré par la cellule, ce dispositif comprend des moyens de stroboscopie pour permettre la mesure aube par aube et identifier l'aube mesurée et les moyens pour faire tourner le rotor l'entraînent à environ 3000 tr/mn de manière que les aubes soient centrifugées à leur position radiale maximale.

L'invention sera mieux comprise à la lecture de la description qui va suivre d'un mode de réalisation de l'invention, faite en référence aux dessins annexés sur lesquels:

– les figures 1 et 2 sont des vues schématiques, respectivement de face et de droite, d'une installation associant la rectification des aubes et la mesure de leur hauteur,

– la figure 3 est une vue à plus grande échelle montrant un détail de la figure 2.

Sur un bâti 1 sont montés des paliers 2 et 3 dans lesquels peut tourner un rotor 4 entraîné à environ 3000 tr/mn par un moteur à courant continu 5 de 45 kW au travers d'un accouplement 6.

Le bâti 1 comporte également un dispositif de rectification des aubes 7 du rotor 4. Ce dispositif se compose de meules 8 adaptées à la nature des aubes et tournant à une vitesse d'environ 1250 tr/mn et de dispositifs 9 de taillage des meules 8 à la conicité désirée.

Un laser 10, placé à hauteur fixe, envoie un faisceau laser 11 de largeur K sur l'extrémité d'une aube déterminée grâce à un fonctionnement stroboscopique commandé par une commande manuelle 12 de phasage reliée à un codeur électronique 13 associé au dispositif d'entraînement. La commande manuelle 12 permet à l'opérateur de mesurer à chaque tour une aube déterminée.

Sur le chemin du faisceau laser 11, une cellule photoélectrique 14 reçoit la partie du faisceau 11' non interceptée par l'extrémité de l'aube, dans une proportion pouvant varier de 0 à 100% du faisceau 11 selon la hauteur de l'aube.

Le signal analogique délivré par la cellule 14 est recueilli par un analyseur-enregistreur 15.

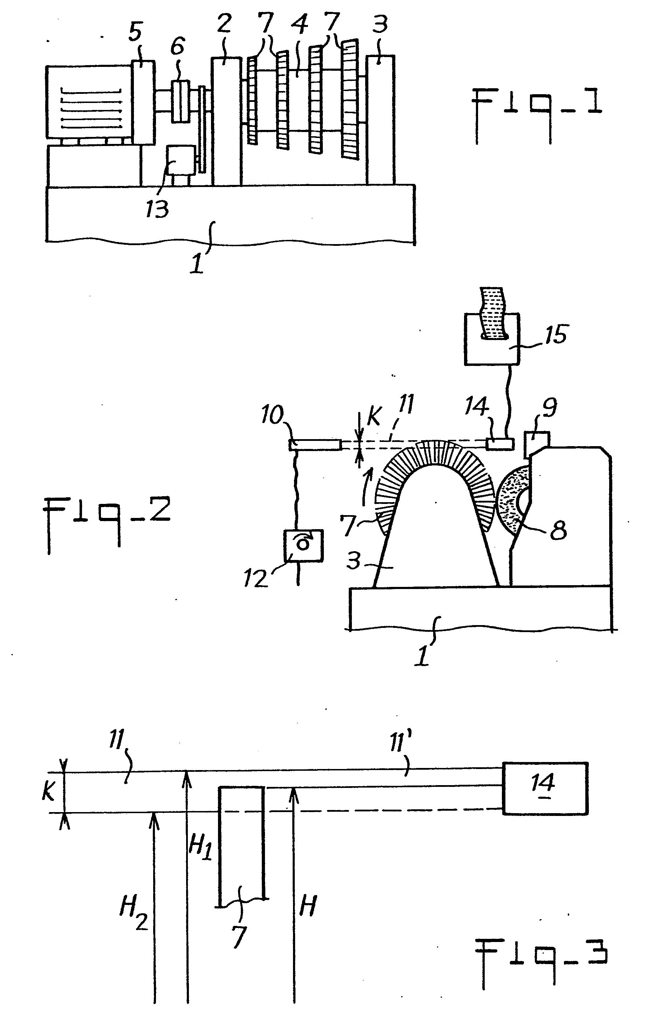

Comme on le voit plus en détail sur la figure 3, au moment de la mesure de l'aube 7 de hauteur H, l'extrémité de ladite aube intercepte partiellement le faisceau 11, si bien que la cellule 14 reçoit une partie 11' du faisceau et transmet à l'intensité lumineuse reçue, et donc fonction directe de la hauteur H. Un étalonnage préalable de l'appareil permet de déterminer la correspondance exacte entre les hauteurs d'aube et les signaux analogiques délivrés.

Le dispositif de l'invention permet donc de fournir une mesure précise des hauteurs des aubes, lorsque celles-ci se trouvent dans une plage réduite d'étendue K (largeur du faisceau 11), entre les hauteurs $H_1$ et $H_2$. Si la hauteur d'aube est égale ou supérieure à $H_1$, la cellule 14 ne reçoit par le faisceau laser. Si la hauteur d'aube est égale ou inférieure à $H_2$, la cellule 14 reçoit l'intégralité du faisceau.

Le dispositif de l'invention permet de contrôler avec précision le processus de rectification des aubes d'un rotor. Le faisceau laser 11 est disposé en général parallèlement à un plan perpendiculaire à l'axe de rotation du rotor de façon à pouvoir intercepter l'aube 7 à la hauteur finale désirée. Lorsque la rectification commence, il se peut que la hauteur d'aube soit supérieure à la hauteur $H_1$ du bord supérieur du faisceau laser 11. Puis, au fur et à mesure que la rectification s'opère, la hauteur d'aube décroît, jusqu'à atteindre une valeur comprise dans la plage $H_1$ $H_2$. L'opérateur peut alors suivre et enregistrer les mesures de façon continue.

La commande manuelle 12 peut être remplacée par une commande automatique de phasage pour illuminer à tour de rôle les différentes aubes, tandis que l'enregistreur 15 peut effectuer un traitement statistique des signaux délivrés et commander la rectification.

## Revendications

1. Procédé de mesure de précision par laser de la hauteur des aubes (7) d'un rotor (4) de turbomachine entraîné en rotation, la hauteur des aubes se trouvant au moment de la mesure dans une plage réduite (K) prédéterminée de hauteurs possibles ($H_1$, $H_2$), du genre dans lequel:
– on illumine avec un faisceau laser (11) une extrémité du diamètre externe du rotor (4),
– on dispose sur le chemin du faisceau laser (11), au-delà de la partie illuminée du rotor (4) une cellule photo-électrique (14) susceptible de recevoir une partie (11') du faisceau laser (11) non interceptée par le rotor (4) au moment de la mesure pour en fournir un signal analogique,
– on recueille ce signal en tant qu'indication du diamètre externe du rotor (4), caractérisé en ce que l'on fait tourner le rotor (4) à environ 3000 tr/mn de manière à ce que les aubes soient centrifugées à leur position radiale maximale et en ce qu'une commande associée à des moyens stroboscopiques (12, 13) intervient de manière qu'à chaque tour une aube déterminée (7) du rotor (4) est illuminée par le faisceau laser (11) et le signal recueilli donne l'indication de la hauteur de ladite aube illuminée (7), réalisant une mesure aube par aube et déterminant la hauteur maximale de chaque aube.

2. Procédé selon la revendication 1, caractérisé en ce qu'on associe la mesure à une opération de rectification à grande vitesse des extrémités d'aubes (7) du rotor (4) de la turbomachine.

3. Dispositif de mesure de précision de la hauteur des aubes (7) d'un rotor (4) de turbomachine du type comportant un laser (10), des moyens (5, 6) pour faire tourner le rotor (4), une cellule photo-électrique (14) à signal analogique disposée sur le chemin du faisceau laser au-delà du rotor (4) et un analyseur-enregistreur (15) pour recueillir le signal analogique délivré par la cellule (14), caractérisé en ce qu'il comprend en outre des moyens de stroboscopie (12, 13) pour permettre la mesure aube par aube et identifier l'aube (7) mesurée, et en ce que les dits moyens (5, 6) pour faire tourner le rotor (4) l'entraînement à environ 3000 tr/mn de manière que les aubes soient centrifugées à leur position radiale maximale.

4. Dispositif selon la revendication 3, caractérisé en ce qu'il comporte en outre des moyens (8, 9) de rectification à grande vitesse des extrémités d'aubes (7) du rotor (4) de la turbomachine.

## Claims

1. A process for the precision laser measurement of the height of the blades (7) of a rotor (4) of a turbomachine driven in rotation, the height of the blades at the time of the measurement being in a predetermined reduced range (K) of possible heights ($H_1$, $H_2$), of the kind in which:
– one end of the outside diameter of the rotor (4) is illuminated with a laser beam (11),
– a photoelectric cell (14) is disposed in the path of the laser beam (11) beyond the illuminated part of the rotor (4) and is adapted to receive a part (11') of the laser beam (11) not intercepted by the rotor (4) at the time of the measurement in order to deliver an analog signal therefrom,
– this signal is collected as an indication of the outside diameter of the rotor (4), characterised in that the rotor (4) is rotated at approximately 3000 r.p.m. so that the blades are centrifuged to their maximum radial position and in that a control connected to stroboscope means (12, 13) comes into operation so that on each revolution a given blade (7) of the rotor (4) is illuminated by the laser beam (11) and the signal collected gives an indication of the height of said illuminated blade (7), giving a blade-by-blade measurement and determining the maximum height of each blade.

2. A process according to claim 1, characterised in that the measurement is associated with a high-speed truing operation for the ends of blades (7) of the rotor (4) of the turbomachine.

3. Apparatus for the precision measurement of the height of the blades (7) of a turbomachine rotor (4) of the type comprising a laser (10), means (5, 6) for rotating the rotor (4), an analog signal photoelectric cell (14) disposed in the path of the laser beam beyond the rotor (4) and an analyzer-recorder (15) to collect the analog signal delivered by the cell (14), characterised in that it also comprises stroboscope means (12, 13) to allow blade-by-blade measurement and to identify the measured blade (7) and in that said means (5, 6) for rotating the rotor (4) drive it at approximately 3000 r.p.m. so that the blades are centrifuged to their maximum radial position.

4. Apparatus according to claim 3, characterised in that it also comprises means (8, 9) for high-speed truing of the ends of blades (7) of the rotor (4) of the turbomachine.

## Patentansprüche

1. Präzisionsmeßverfahren zur Messung der Höhe der Schaufeln (7) eines mit einer Drehbewegung beaufschlagten Turbomaschinen-Rotors (4) mittels Laser, wobei die Höhen der Schaufeln im Zeitpunkt der Messung in einem vorbestimmten reduzierten Bereich (K) möglicher Höhen ($H_1$, $H_2$) liegen,
mit folgenden Verfahrensschritten:

man beleuchtet einen Endbereich des Außendurchmessers des Rotors (4) mit einem Laser-Strahlenbündel (11),

ordnet auf dem Weg des Laser-Strahlenbündels (11) jenseits des beleuchteten Teils des Rotors (4) eine photoelektrische Zelle (14) in der Weise an, daß diese einen im Zeitpunkt der Messung von dem Rotor (4) nicht abgeschatteten Teil (11') des Laser-Strahlenbündels (11) aufnimmt und daraus ein analoges Signal bildet, und

nimmt dieses Signal als Indikator für den Außendurchmesser des Rotors (4) auf, dadurch gekennzeichnet, daß man den Rotor (4) mit etwa 3000 Umdrehungen/Minute rotieren läßt, so daß die Schaufeln in ihre äußerste radiale Position zentrifugiert werden,

und daß man eine einer Stroboskopeinrichtung (12, 13) zugeordnete Steuerung in der Weise eingreifen läßt, daß bei jeder Umdrehung eine bestimmte Schaufel (7) des Rotors (4) von dem Laser-Strahlenbündel (11) beleuchtet wird und das aufgenommene Signal den Indikator für die Höhe dieser beleuchteten Schaufel (7) ergibt, wodurch die Schaufeln Stück für Stück gemessen werden und die maximale Höhe jeder Schaufel bestimmt wird.

2. Verfahren nach Anspruch 1, dadurch gekennzeichnet, daß man die Messung einem Hochgeschwindigkeits-Schleifbearbeitungsvorgang der Schaufel-Enden (7) des Turbomaschinen-Rotors (4) zuordnet.

3. Präzisionsmeßvorrichtung zur Messung der Höhe der Schaufeln (7) eines Turbomaschinen-Rotors (4) mit einem Laser (10), einer Einrichtung (5, 6) zum Drehen des Rotors (4),

einer in dem Strahlengang des Laser-Strahlenbündels jenseits des Rotors (4) angeordneten photoelektrischen Zelle (14) zur Erzeugung eines analogen Signals,

und einer Analysier- und Registriereinrichtung (15) zum Aufnehmen des von der Zelle (14) erzeugten analogen Signals, dadurch gekennzeichnet, daß eine Stroboskopeinrichtung (12, 13) vorgesehen ist, die eine Messung der Schaufeln Stück für Stück und eine Identifizierung der jeweils gemessenen Schaufel (7) ermöglicht, und daß die genannten Mittel (5, 6) zum Drehen des Rotors (4) diesen mit etwa 3000 Umdrehungen/Minute antreiben, so daß die Schaufeln in ihre äußerste radiale Position zentrifugiert werden.

4. Vorrichtung nach Anspruch 3, dadurch gekennzeichnet, daß ihr ferner Mittel (8, 9) zur Hochgechwindigkeits-Schleifbearbeitung der Schaufel-Enden (7) des Turbomaschinen-Rotors (4) zugeordnet sind.

Fig-1

Fig-2

Fig-3